# EUROPÄISCHE PATENTSCHRIFT

(11) **EP 2 309 848 B1**
(45) Veröffentlichungstag und Bekanntmachung des Hinweises auf die Patenterteilung: **08.04.2015**
(21) Anmeldenummer: 09781091.5
(22) Anmeldetag: 27.07.2009
(51) Int. Cl.: A01N 25/34, A01P 7/04

(54) **MIT INSEKTIZIDEN IMPRÄGNIERTE NETZE UND DEREN VERWENDUNG ZUM SCHUTZ VOR SCHÄDLINGEN**
INSECTICIDE-IMPREGNATED NETS AND USE THEREOF FOR PROTECTING AGAINST PESTS
FILETS IMPRÉGNÉS D'INSECTICIDES ET LEUR UTILISATION POUR LA PROTECTION CONTRE LES PARASITES

(30) Priorität: 30.07.2008 EP 08161456
(43) Veröffentlichungstag der Anmeldung: 20.04.2011
(73) Patentinhaber: BASF SE, 67056 Ludwigshafen (DE)
(72) Erfinder: KARL, Ulrich, 67269 Grünstadt (DE); STUTZ, Susanne, 69469 Weinheim (DE); LEININGER, Hartmut, 67434 Neustadt (DE); KAISER, Claus, 68305 Mannheim (DE)
(86) Internationale Anmeldenummer: PCT/EP2009/059626
(87) Internationale Veröffentlichungsnummer: WO 2010/012671

(56) Entgegenhaltungen:
- WO-A1-03/090532
- WO-A2-2007/144401
- BETHKE ET AL: "Screen hole size and barriers for exclusion of insect pests of Glasshouse Crops", J.ENTOMOL.SC,, Bd. 26, 1. Januar 1991 (1991-01-01), Seiten 169-177, XP009141372, in der Anmeldung erwähnt

## Beschreibung

Die Erfindung betrifft mit Insektiziden imprägnierte Netze aus Textilfasern, welche eine geringe Maschengröße aufweisen sowie deren Verwendung zum Schutz vor Schädlingen.

Insektenschutznetze sind prinzipiell bekannt. Sie werden beispielsweise als Fenster verwendet, um Insekten aller Art sowie ggf. auch größere Lebewesen wie Vögel oder Nagetiere aus dem Hausinneren heraus zu halten. Beispielhaft sei weiterhin die Verwendung von Moskitonetzen genannt. Insektenschutznetze werden weiterhin verwendet, um Pflanzen, Pflanzenteile, Früchte oder nicht lebende Materialien vor Schädlingen zu schützen, beispielsweise indem man die zu schützenden Pflanzen oder Materialien darin einwickelt, oder indem man die Netze als Fenster in Gewächshäusern oder zum Bau von Gewächshäusern verwendet.

Insektenschutznetze sind kommerziell mit verschiedenen Maschengrößen erhältlich. Typische Moskitonetze aus Polyester weisen Maschen mit einer Größe von etwa 2 mm x 2 mm auf; kommerziell erhältliche Moskitonetze aus Polyethylen-Monofilament weisen häufig hexagonale Maschen auf, wobei die Abstände der parallelen Seiten 2,5 mm betragen.

Netze mit einer derartigen Maschenweite sind aber für kleine Insekten, wie beispielsweise Fransenflügler, Mottenschildläuse (White flies) oder Sandfliegen noch passierbar. Bethke et al. geben in "Screen hole size and barriers for exclusion of insect pests of glasshouse crops" J. Entomol. Sc. 26: 169-177 (1991) einen "kritischen Insekten-durchmesser" von ca. 0,2 bis ca. 0,6 mm für verschiedene kleinere Insekten an. Netze, welche auch für derartige Insekten nicht mehr passierbar sein sollen, müssen also deutlich geringere Maschengrößen aufweisen als übliche Moskitonetze. Kommerziell erhältliche Netze zum Schutz vor derartigen Insekten weisen Maschengrößen von weniger als 1 mm x 1 mm auf bis herab zu 0,15 mm x 0,15 mm auf.

Nachteiligerweise nimmt aber auch die Luft-, Wasserdampf- und Lichtdurchlässigkeit des Netzes mit abnehmender Maschengröße ab. So kann die Luftdurchlässigkeit bei sehr engmaschigen Netzen durchaus um ca. 50 % gegenüber weitmaschigen Netzen reduziert sein. Diese Abnahme der Durchlässigkeit ist für viele Anwendungen der Netze, insbesondere bei der Verwendung als Fenstermaterialien für Gewächshäuser äußerst unerwünscht; vielmehr soll ein ausreichender Luftaustausch und die Diffusion von Wasserdampf möglich sein und außerdem darf die Lichtintensität nicht zu stark vermindert werden.

Es ist weiterhin bekannt, Insektenschutznetze, insbesondere Moskitonetze mit Insektiziden zu imprägnieren.

WO 2003/034823 offenbart eine Formulierung zum Imprägnieren von Moskitonetzen sowie damit imprägnierte Netze, welche mindestens ein Insektizid, ein copolymeres Bindemittel sowie mindestens ein Dispergierhilfsmittel umfasst.

WO 2005/064072 offenbart eine Formulierung zum Imprägnieren von Moskitonetzen sowie damit imprägnierte Netze, welche mindestens ein Insektizid oder anderen Wirkstoff sowie mindestens ein Bindemittel umfasst. Bei dem Bindemittel kann es sich um ein Polyacrylat handeln, welches als Monomere wenigstens n-Butylacrylat, ein davon verschiedenes Acrylat sowie mindestens ein Hydroxyalkylacrylamid umfasst.

EP 1 411 764 B1 offenbart Zäune zur Verhinderung des Eindringens von tief fliegenden Insekten in bestimmte Freiluftbereiche, welche mit Insektiziden imprägnierte Netze umfassen.

WO 2007/144401 offenbart ein Verfahren zum Schutz von Tabak, bei dem man den Tabak mit einem Insektizid-imprägnierten Material, z.B. einem Insektizid-imprägnierten Netz bedeckt. Die Beispiele offenbaren Netze mit quadratischen Maschen von 2 mm x 2 mm bzw. 1 mm x 1 mm.

WO 2008/52913 offenbart ein Verfahren zum Schutz von Nutzpflanzen, bei dem man die Pflanzen mit einem Pestizid-imprägnierten Netz bedeckt, welches durchlässig für Licht, Luft und Wasser ist.

JP 2270803 A offenbart ein Netz zum Schutz vor Insekten, dessen Fäden durch Zusammenschmelzen eines Ethylen-Vinylacetat-Copolymers und dem Wirkstoff Empenthrin sowie optional weiteren Wirkstoffen erhalten werden. Die Fäden können einen Durchmesser von 0,2 bis 1 mm aufweisen und die Maschenweite beträgt 2 bis 4 mm.

JP 2001-292688 A offenbart ein Insektenschutznetz zum Einsetzen in Fenster von Wohnungen, Büros und Gewächshäusern, welches aus Polyolefin-Fasern gefertigt ist und mit einem Acrylharz beschichtet ist. Die Maschendichte beträgt 20 x 20 Fäden pro Richtung und inch, dies entspricht einer Maschengröße von ca. 1,5 mm². Das Netz ist aber nicht mit Insektiziden imprägniert.

WO 2008/004711 offenbart ein Netz zur Kontrolle von Insekten, dessen Fasern ein thermoplastisches Polymer sowie einen Wirkstoff mit einem Dampfdruck < 1*10⁻⁶ mm Hg bei 25°C aufweisen, und wobei das Netz im Wesentlichen gleichartige Maschen mit einer Fläche von jeweils 2 mm² bis 36 mm² aufweist.

Aufgabe der Erfindung war es, Netze zum Schutz von Menschen, Tieren, Pflanzen und nicht-lebenden Materialien vor dem Befall durch Schädlinge bereitzustellen, welche auch noch vor kleinen Insekten einen ausreichenden Schutz bieten, aber dennoch eine gute Luft-, Wasserdampf- und Lichtdurchlässigkeit aufweisen. Die Netze sollten insbesondere zum Schutz vor Sandfliegen dienen und zum Bau von Gewächshäusern sowie dem Schutz von Fenster-, Tür- und Belüftungsöffnungen geeignet sein.

Überraschenderweise wurde gefunden, dass dieses Problem durch die Ausrüstung von feinmaschigen Netzen mit Insektiziden gelöst werden kann. Die ausgerüsteten feinmaschigen Netze bieten auch bei höherem Populationsdruck noch ausreichenden Schutz. Sie bieten vor allem auch dann noch Schutz, wenn das Netz kleinere Beschädigungen, wie beispielsweise Löcher aufweist.

Dem entsprechend wurden Insektenschutznetze aus Textilfasern einer Dicke von 0,05 mm bis 0,6 mm gefunden, wobei die Textilfasern so angeordnet sind, dass das Netz ein Muster von Maschen mit einer geraden Anzahl von Ecken umfasst, und wobei das Netz mit mindestens einem Insektizid ausgerüstet ist, und wobei die Maschen ausgewählt werden aus der Gruppe von
- viereckigen Maschen in Form eines Parallelogramms mit den Seiten a und b sowie einer Höhe hₐ handelt, wobei die Höhe hₐ 0,1 mm bis 0,99 mm und das Länge-zu-Höhe-Verhältnis b/ hₐ 1:1 bis 5:1 beträgt, und
- sechseckigen Maschen, welche drei Paare von jeweils zueinander parallelen Seiten a, b und c in den Abständen hₐ, h_{b} und h_{c} aufweisen, wobei die Höhe hₐ 0,1 bis 0,99 mm und das Verhältnis ((h_{b}+h_{c}) / 2) / hₐ 1:1 bis 5:1 beträgt,
- achteckigen Maschen, welche vier Paare von jeweils zueinander parallelen Seiten a, b, c und d in den Abständen hₐ, h_{b}, h_{c} und h_{d} aufweisen, wobei die Höhe hₐ 0,1 bis 0,99 mm und das Verhältnis ((h_{b}+h_{c}+h_{d}) / 3) / hₐ 1:1 bis 5:1 beträgt,
und wobei sich die Angaben von Länge und Höhe jeweils auf das Lochmaß beziehen.

In einer bevorzugten Ausführungsform der Erfindung wird das Netz mit einer bevorzugt wässrigen Formulierung, umfassend mindestens ein Insektizid und mindestens ein polymeres Bindemittel imprägniert.

Die Erfindung betrifft weiterhin die Verwendung derartiger Netze zum Schutz von Fenster- und Türöffnungen, zum Bau von Gewächshäusern, zum Schutz von Pflanzen und zum Schutz von Gütern, insbesondere von Tee, Tabak oder Baumwolle.

Zu der Erfindung ist ein Einzelnen das Folgende auszuführen:

### Netze

Bei den Netzen handelt es sich um Netze aus Textilfasern. Es kann sich hierbei um Netze aus natürlichen Fasern oder aus synthetischen Fasern handeln. Selbstverständlich kann es sich auch um Mischungen zweier oder mehrerer verschiedener Fasern handeln. Beispiele für natürliche Fasern umfassen Baumwoll-, Jute- oder Leinenfasern. Bevorzugt handelt es sich um synthetische Fasern aus geeigneten Polymeren. Beispiele umfassen Polyamide, Polyester, Polyacrylnitril oder Polyolefine. Bevorzugt handelt es sich um Polyamide, Polyolefine und Polyester, besonders bevorzugt um Polyolefine oder Polyester, insbesondere PET, und ganz besonders bevorzugt sind Polyolefinfasern, insbesondere Polypropylen oder Polyethylen.

Es kann sich um glatte oder texturierte Fasern handeln. Bei den Fasern kann es sich um Mono-, Oligo- oder Multifilamente handeln.

Bei Polypropylen und Polyethylen kann es sich um Polypropylen- bzw. PolyethylenHomopolymere handeln. Es kann sich aber auch um Copolymere handeln, welche neben dem Ethylen bzw. Propylen geringe Mengen anderer Comonomere umfassen. Bei geeigneten Comonomeren kann es sich insbesondere um andere Olefine wie beispielsweise Ethylen oder Propylen sowie 1-Buten, 2-Buten, Isobuten, 1-Penten, 1-Hexen, 1-Hepten, 1-Octen, Styrol oder α-Methylstyrol, Diene und/oder Polyene handeln. Der Anteil von Comonomeren im Polyethylen bzw. Polypropylen beträgt im Allgemeinen maximal 20 Gew. %, bevorzugt maximal 10 Gew. %. Art und Menge der Comonomere werden vom Fachmann je nach den gewünschten Eigenschaften der Faser gewählt.

Besonders bevorzugt zur Faserherstellung sind relativ hochmolekulare, zähfließende Produkte, welche in üblicher Art und Weise durch Ihren Schmelzflussindex (bestimmt nach ISO 1133) charakterisiert werden. Bevorzugt kann es sich um mindestens ein Polypropylen bzw. Polyethylen mit einem Schmelzflussindex MFR (230°C, 2,16 kg) von 0,1 bis 60 g / 10 min handeln. Bevorzugt handelt es sich um Polypropylen mit einem Schmelzflussindex MFR (230°C, 2,16 kg) von 1 bis 50 g / 10 min, besonders bevorzugt 10 bis 45 g / 10 min und beispielsweise 30 bis 40 g / 10 min. Derartige Polypropylensorten eignen sich besonders zur Herstellung von Fasern. Selbstverständlich kann auch eine Mischung mehrerer verschiedener Sorten von Polypropylen eingesetzt werden.

Die Textilfasern des Netzes weisen je nach der Art des Netzes eine Dicke von 0,05 bis 0,6 mm auf, bevorzugt 0,1 mm bis 0,4 mm, besonders bevorzugt 0,12 bis 0,35 mm und ganz besonders bevorzugt 0,2 bis 0,3 mm.

Die Textilfasern sind in Form eines Netzes angeordnet, wobei das Netz ein Muster von Maschen mit einer geraden Anzahl von Ecken aufweist. Die Netze können hierbei bevorzugt nur aus einer einzigen Sorte von Maschen bestehen, beispielsweise nur aus viereckigen oder nur aus sechseckigen Maschen, oder sie können auch zwei oder mehrere Sorten verschiedener Maschen umfassen, beispielsweise eine Kombination aus achteckigen und viereckigen Maschen.

Die Maschen des Netzes sollten hierbei bevorzugt im Wesentlichen gleichartig sein, d.h. dass das Netz zwar durchaus kleinere Abweichungen im Hinblick auf Form und die Größe der Maschen aufweisen kann, dass die Werte aber um die Mittelwerte nicht übermäßig stark streuen.

Die Maschen des Netzes werden bevorzugt ausgewählt aus der Gruppe von viereckigen, sechseckigen oder achteckigen Maschen.

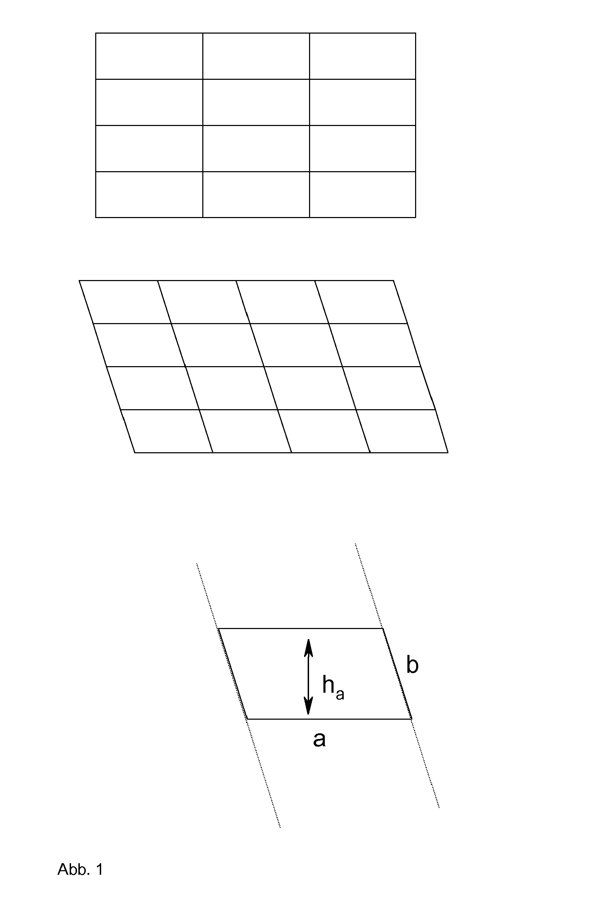

Bei den viereckigen Maschen handelt es sich um Maschen in Form eines Parallelogramms mit den Seiten a und b. Der Begriff "Parallelogramm" umfasst selbstverständlich auch die Begriffe "Rechteck" und "Quadrat". Der kleinere Winkel zwischen den beiden Seiten des Parallelogramms liegt im Regelfalle zwischen 60 und 90°. Für den Grenzfall von 90° handelt es sich bei dem Parallelogramm um ein Rechteck. Für den Grenzfall a = b und 90° handelt es sich um ein Quadrat. Das Parallelogramm weist weiterhin die Höhe hₐ auf. Bei einem Rechteck beziehungsweise einem Quadrat entspricht die Höhe hₐ der Länge der Seite a.
Der Aufbau zweier Netze aus Parallelogrammen ist schematisch in Abb. 1 gezeigt. Weiterhin sind in Abb. 1 die Definition der Größen a, b und hₐ ebenfalls schematisch gezeigt.

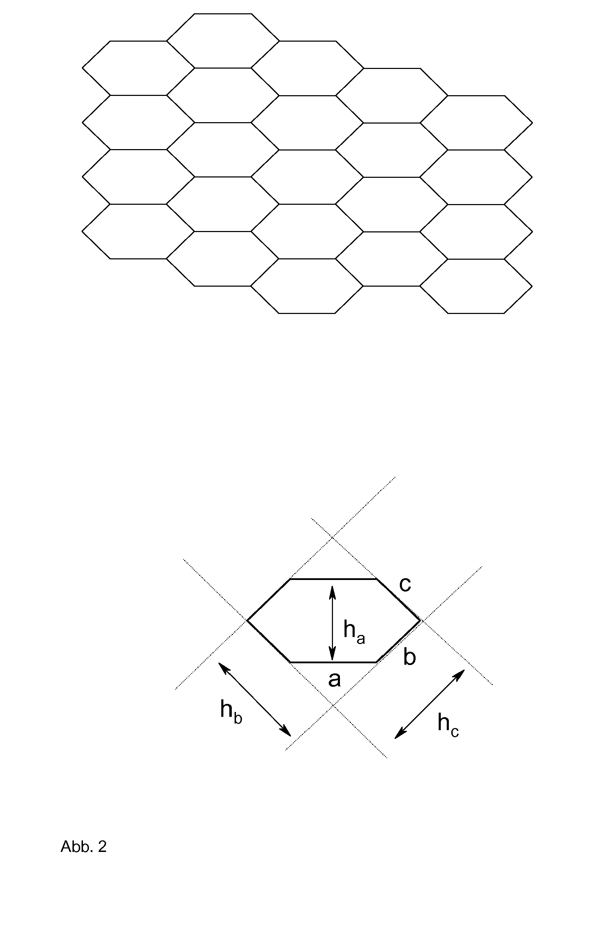

Bei den sechseckigen Maschen sind drei Paare von jeweils zueinander parallelen Seiten a, b und c in den Abständen hₐ, h_{b} und h_{c} angeordnet. Der Aufbau eines Netze aus Sechsecken ist schematisch in Abb. 2 gezeigt. Weiterhin sind in Abb. 2 die Definition der Größen a, b, c und hₐ, h_{b} und h_{c} ebenfalls schematisch gezeigt.

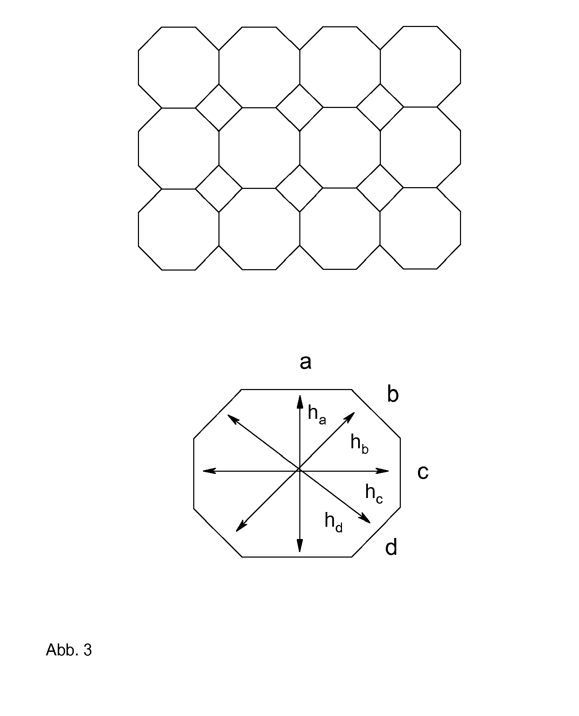

Bei den achteckigen Maschen sind vier Paare von jeweils zueinander parallelen Seiten a, b, c und d in den Abständen hₐ, h_{b}, h_{c} und h_{d} angeordnet. Der Aufbau eines Netzes aus Achtecken ist schematisch in Abb. 3 gezeigt. Weiterhin sind in Abb. 3 die Definition der Größen a, b, c, d und hₐ, h_{b}, h_{c} und h_{d} ebenfalls schematisch gezeigt. Es ist dem Fachmann bekannt, dass sich auch Achtecken keine flächendeckenden Muster erstellen lassen. Ein Netz, welches achteckige Maschen umfasst, umfasst daher zusätzlich mindestens eine zweite Sorte von Maschen. Es kann sich hierbei um viereckige Maschen handeln, wie beispielsweise in Abb. 3 dargestellt.

Erfindungsgemäß beträgt die Höhe hₐ sowohl beim Parallelogramm, beim Sechseck und beim Achteck 0,1 bis 0,99 mm, bevorzugt 0,1 bis 0,9 mm, besonders bevorzugt 0,12 bis 0,8 mm und ganz besonders bevorzugt 0,25 bis 0,7 mm.

Beim Parallelogramm beträgt das Verhältnis Länge-zu-Höhe-Verhältnis b / hₐ 1:1 bis 5:1, bevorzugt 1:1 bis 4:1 und besonders bevorzugt 2:1 bis 4:1. Bei den Maschen kann es sich also für den Fall eines Verhältnis b / hₐ 1:1 um ein Quadrat mit einer Seitenlänge von 0,1 bis 0,99 mm handeln. Bei einem größeren Verhältnis von b / hₐ handelt es sich um ein in einer Richtung langgestrecktes Gebilde. Durch den Abstand hₐ von maximal 0,99 mm werden auch kleinere Insekten wirkungsvoll vom Passieren des Netzes abgehalten, während die Länge durchaus größer sein kann als 0,99 mm, so dass die Luftdurchlässigkeit des Netzes nicht übermäßig behindert wird.

Beim Sechseck beträgt das Verhältnis ((h_{b}+h_{c}) / 2) / hₐ 1:1 bis 5:1, bevorzugt 1:1 bis 4:1 und besonders bevorzugt 2:1 bis 4:1. Die Verhältnisse sind hier analog zum Parallelogramm. Für den Fall eines Verhältnisses von 1:1 handelt es sich um ein regelmäßiges Sechseck mit drei gleichen Seiten, welche jeweils den gleichen Abstand von nicht mehr als 0,99 mm zueinander aufweisen. Bei einem größeren Verhältnis ((h_{b}+h_{c}) / 2) / hₐ entsteht ein in einer Richtung langgestrecktes Sechseck. Die Wirkung hinsichtlich Insekten- bzw. Luftdurchlässigkeit ist wie beim Parallelogramm.

Beim Achteck beträgt das Verhältnis ((h_{b}+h_{c}+h_{d}) / 3) / hₐ 1:1 bis 5:1, bevorzugt 1:1 bis 4:1 und besonders bevorzugt 2:1 bis 4:1. Die Verhältnisse sind hier analog zum Parallelogramm. Für den Fall eines Verhältnisses von 1:1 handelt es sich um ein regelmäßiges Achteck mit vier gleichen Seiten, welche jeweils den gleichen Abstand von nicht mehr als 0,99 mm zueinander aufweisen. Bei einem größeren Verhältnis ((h_{b}+h_{c}) / 3) / hₐ entsteht ein in einer Richtung langgestrecktes Achteck. Die Wirkung hinsichtlich Insekten- bzw. Luftdurchlässigkeit ist wie beim Parallelogramm.

Neben vier- und sechseckigen Maschen können beispielsweise auch Kombinationen von vier- und achteckigen Maschen eingesetzt werden oder die Form und Größe der Maschen in Teilen des Netzes variiert werden. Beispielsweise können die Ränder des Netzes dichter gewirkt werden oder es können in Abständen dickere Textilfasern, die auch aus einem anderen Polymer hergestellt sind, zur Stabilisierung eingewirkt werden.

Die Begriffe "Höhe" und "Länge" beziehen sich auf die offene Fläche jeder Masche ohne Berücksichtigung der Fasern bzw. der beschichteten Fasern. Analog bedeutet der Begriff "Maschengröße" im Sinne dieser Erfindung das Lochmaß der Maschen, d.h. die offene Fläche jeder Masche ohne Berücksichtigung der Fasern bzw. der beschichteten Fasern.

Die Dicke der zur Herstellung der Netze verwendeten Fasern werden vom Fachmann je nach den gewünschten Eigenschaften des Netzes gewählt. Je dicker die Fasern, desto größer ist im Regelfalle die mechanische Stabilität des Netzes, auf der anderen Seite wird mit abnehmender Maschengröße der Anteil an offener Fläche im Vergleich zum Anteil der von Fasern bedeckten Fläche immer geringer. Im Regelfalle sollte die Faserdicke so bemessen werden, dass das Netz zumindest 20 %, bevorzugt mindestens 40 % und insbesondere mindestens 50 % offene Fläche aufweist. Netze der geschilderten Art sind kommerziell erhältlich.

Bei den verwendeten Netzen kann es sich bevorzugt um einlagige Netze handeln. Es kann sich aber auch um so genannte Abstandsgewirke handeln, bei denen zwei Netze mithilfe von Einzelfäden miteinander zu einer Doppelschicht verbunden sind.

### Insektizide

Erfindungsgemäß sind die Netze mit mindestens einem Insektizid versehen. Bei dem verwendeten Wirkstoff kann es sich im Prinzip um beliebige Insektizide handeln. Der Begriff soll auch solche Insektenabwehrmittel umfassen, welche Insekten zwar nicht töten, aber abstoßend auf Insekten wirken. Der Fachmann trifft je nach der Art der vorgesehenen Anwendung eine geeignete Auswahl. Selbstverständlich können auch Mischungen verschiedener Insektizide verwendet werden. Weiterhin können auch Kombinationen von Insektiziden mit metabolischen Inhibitoren, sogenannten "Efficiency Boostern", wie z.B. Piperonylbutoxid (PBO) verwendet werden.

Geeignete Insektizide zur Ausführung der Erfindung beispielsweise in WO 2005/64072, Seite 11, Zeile 28 bis Seite 14, Zeile 34 genannt. Weitere Beispiele umfassen NArylhydrazine wie in WO 2006/128870, Seite 12, Zeile 1 bis Seite 18, Zeile 37 genannt.

Bevorzugt handelt es sich um mindestens ein Insektizid bzw. Insektenabwehrmittel ausgewählt aus der Gruppe von synthetischer oder natürlicher Pyrethroide, wie beispielsweise Alphacypermethrin, Cyfluthrin, Deltamethrin, Ethofenprox Permethrin oder Bifenthrin, Chlorfenapyr und Fipronil. Besonders bevorzugt sind Alphacypermethrin und Chlorfenapyr.

### Ausrüstung der Netze mit Insektiziden

Bei thermoplastischen Textilfasern können die verwendeten Insektizide direkt in die Fasern eingearbeitet werden, indem man die Insektizide der Polymerschmelze, welche zum Verspinnen der Fasern eingesetzt wird zusetzt. Dies kann beispielsweise während des üblichen Schmelzextrudierens vor dem Verspinnen erfolgen.

In einer weiteren Ausführungsform der Erfindung werden nicht imprägnierte Netze aus Textilfasern eingesetzt, welche mit mindestens einem Insektizid imprägniert werden. Das Fixieren der Insektizide auf der Faser kann hierbei bevorzugt mittels geeigneter niedermolekularer oder polymerer Hilfsmittel erfolgen.

Bevorzugt können die nicht imprägnierten Netze mit einer Mischung umfassend mindestens ein Insektizid und mindestens ein polymeres Bindemittel imprägniert werden. Die Behandlung erfolgt besonders bevorzugt mit einer wässrigen Formulierung, welche mindestens ein Insektizid und mindestens ein polymeres Bindemittel umfasst.

### Polymere Bindemittel

Das Bindemittel dient zum Fixieren des Insektizids auf dem Netz. Hierdurch wird erreicht, dass der Wirkstoff nicht oder zumindest nur sehr langsam ausgewaschen werden kann. Insektenschutznetze sind häufig Wasser ausgesetzt, insbesondere natürlichen Niederschlägen, aufgrund von Taubildung oder auch aufgrund oder künstlicher Bewässerung.

Bei dem polymeren Bindemittel kann es sich im Prinzip um beliebige Bindemittel handeln, vorausgesetzt, die Bindemittel sind in der Lage, Insektizide auf textilen Materialien zu fixieren. Bevorzugt sind insbesondere Bindemittel die aus dem Gebiet der Textilimprägnierung und Textilbeschichtung bekannt sind. Selbstverständlich kann auch ein Gemisch mehrerer, verschiedener Bindemittel eingesetzt werden.

Beispiele umfassen (Meth)acrylate umfassende Homo- oder Copolymere, Polyurethane, Polyisocyanurate oder Wachse, insbesondere Polyethylenwachse. Geeignete Bindemittel sind beispielsweise in WO 2005/064072 auf den Seiten 17 bis 24 oder WO 2008/052913 auf den Seiten 21 bis 33 offenbart.

Beispielsweise kann es sich um Bindemittel handeln, welche sich durch Polymerisation ethylenisch ungesättigter Momonere erhalten lassen, bevorzugt mindestens ein Monomer aus der Gruppe ausgewählt von (Meth)acrylaten, insbesondere C₁- bis C₁₂-Ester von (Meth)acrylsäure, vernetzende Gruppen aufweisende (Meth)acrylate, (Meth)acrylsäure, Maleinsäure oder Ester der Maleinsäure, Acrylnitril, Styrol, Vinylace-tat, Vinylalkohol, Ethylen, Propylen, Allylalkohol oder Vinylchlorid.

In einer bevorzugten Ausführungsform der Erfindung handelt es um ein Copolymer I aus ethylenisch ungesättigten Monomeren, welches als Monomere 50 bis 95 Gew. % mindestens eines (Meth)acrylats (A) der allgemeinen Formel H₂C=CHR¹-COOR² umfasst, wobei R¹ für H oder Methyl und R² für einen aliphatischen, linearen oder verzweigten Kohlenwasserstoffrest mit 1 bis 12 Kohlenstoffatomen, bevorzugt 2 bis 10 Kohlenstoffatomen handelt. Bei R¹ handelt es sich bevorzugt um H. Beispiele geeigneter Reste R² umfassen insbesondere Methyl-, Ethyl-, n-Butyl oder 2-Ethylhexylreste, bevorzugt Ethyl-, n-Butyl- oder 2-Ethylhexylreste. Das Copolymer umfasst darüber hinaus 1 bis 20 Gew. % (Meth)acrylsäure oder zusätzliche funktionelle Gruppen aufweisenden (Meth)acrylsäurederivaten (B). Hierbei kann es sich insbesondere um einen (Meth)acrylsäureester und/oder (Meth)acrylamide handeln. Die funktionellen Gruppen dienen zur Anbindung der Bindemittel auf den Netzen und können außerdem zur Vernetzung genutzt werden. Beispielsweise kann es sich um ω-Hydroxyalkyl(meth)acrylsäureester, Epoyxgruppen aufweisende (Meth)acrylester, wie beispielsweise Glycidylester, (Meth)acrylamide oder Derivate davon wie beispielsweise (Meth)acrylsäuremethylolamid H₂C=CH(CH₃)-CO-HN-CH₂-OH handeln. Daneben können weitere, von A und B verschiedene ethylenisch ungesättigte, bevorzugt monoethy-lenisch ungesättigte Monomere (C) eingesetzt werden, beispielsweise Acrylnitril oder Styrol. Die Menge weiterer Monomere beträgt im Regelfalle 0 bis 30 Gew. %. Weitere Einzelheiten zu den Copolymeren I sind in WO 2008/052913 Seite 24, Zeile 3 bis Seite 27, Zeile 32 beschrieben. Ganz besonders bevorzugte Bindemittel sind in WO 2008/052913 Seite 28, Zeile 11 bis Seite 30, Zeile 6 beschrieben. Besonders bevorzugt ist ein Bindemittel, welches 70 bis 90 Gew. % eines Acrylsäureesters H₂C=CH₂-COOR² umfasst, wobei R² 4 bis 8 C-Atome umfasst und es sich bevorzugt um n-Butyl-und/oder 2-Ethylhexyl- handelt sowie weiterhin 10 bis 20 Gew. % Acrylnitril, 1 bis 10 Gew. % (Meth)crylsäure oder eines funktionelle Gruppen aufweisenden (Meth)acrylsäurederivates, insbesondere (Meth)acrylsäuremethylolamid.

Die genannten, bevorzugten Bindemittel können bevorzugt mittels Emulsionspolymerisation eingesetzt werden. Einzelheiten hierzu sind in WO 2005/064072 Seite 20, Zeile 20 bis Seite 23, Zeile 15 beschrieben.

In einer weiteren bevorzugten Ausführungsform der Erfindung handelt es sich bei dem Bindemittel um ein Copolymer II, welches aus 60 bis 95 Gew. % Ethylen, 5 bis 40 Gew. % mindestens einer ethylenisch ungesättigten Carbonsäure ausgewählt aus der Gruppe von C₃ bis C₁₀-Monocarbonsäuren und C₄ bis C₁₀-Dicarbonsäuren sowie optional 0 bis 30 Gew. % weiteren Monomeren aufgebaut ist. Beispiele von Carbonsäuren umfassen (Meth)acrylsäure, Maleinsäure oder Fumarsäure. Bevorzugt ist (Meth)acrylsäure. Bei weiteren Monomeren kann es sich beispielsweise um andere Olefine wie Propen, 1-Buten, (Meth)acrylate wie Methyl(meth)acrylat, E-thyl(meth)acrylat, n-Butyl(meth)acrylat oder Vinylphosphonsäure handeln. Einzelheiten zur Herstellung derartiger Copolymere II sind beispielsweise in WO 2007/009909 offenbart. Weitere Einzelheiten zu dieser bevorzugten Bindemittelklasse sind in PCT/EP2008/057048 offenbart.

### Formulierung zum Imprägnieren - Vernetzer

Zur Herstellung der erfindungsgemäßen Netze können die Bindemittel in Form einer Formulierung in einem Lösemittel, bevorzugt als wässrige Formulierung eingesetzt werden, die Erfindung umfasst aber auch, lösemittelfreie Formulierungen einzusetzen.

In einer bevorzugten Ausführungsform der Erfindung werden wässrige Formulierungen eingesetzt, welche 55 bis 99 Gew. % Wasser, bevorzugt 85 bis 98 Gew. % Wasser und 1 bis 45 Gew. %, bevorzugt 2 bis 15 Gew. % an Feststoffen enthalten, wobei die Mengenangaben jeweils auf die Summe aller Komponenten in der Formulierung bezogen sind. Die genaue Konzentration richtet sich auch nach dem Adsorptionsvermögen des textilen Substrats.

Bei den Feststoffen handelt es sich um mindestens ein Bindemittel, mindestens ein Insektizid, optional mindestens einen Vernetzer sowie optional weitere Komponenten.

Bevorzugt wird mindestens ein wasserdispergierbarer Vernetzer eingesetzt. Hierbei kann es sich insbesondere um einen Vernetzer handeln, welcher über freie Isocyanatgruppen verfügt. Hierbei kann es sich bevorzugt um Isocyanurate handeln, welche über freie Isocyanatgruppen verfügen, bevorzugt um Isocyanurate, welche sich von aliphatischen, cycloaliphatischen oder aromatische Diisocyanaten mit 4 bis 12 Kohlenstoffatomen ableiten. Beispiele umfassen 1,6-Hexamethylendiisocyanat, 1,12-Dodecandiisocyanat, 2,2'- und 2,4'-Dicyclohexylmethandiisocyanat oder 2,4-Toluyldiisocyanat. Bevorzugt sind Isocyanurate auf Basis von 1,6-Hexamethylendiisocyanat. Besonders bevorzugt sind Isocyanurate, welche zusätzliche hydrophile Gruppen aufweisen, wie insbesondere Polyethylenoxidgruppen. Die Herstellung derartiger Isocyanurate ist dem Fachmann bekannt. Sie werden bevorzugt gelöst in polar aprotischen Lösemitteln, wie beispielsweise Ethylencarbonat oder Propylencarbonat eingesetzt. Weitere Einzelheiten zu den bevorzugten, Isocyanatgruppen aufweisenden Vernetzern sind in WO 2008/052913 Seite 34, Zeile 6 bis Seite 35, Zeile 3 offenbart. Besonders bevorzugt wird ein auf 1,6-Hexamethylendiisocyanat (HMDI) basierendes Isocyanurat, welches über zusätzliche Polyethylenoxidgruppen verfügt eingesetzt, wobei das Isocyanurat in Propylencarbonat gelöst ist (70 Gew. % HMDI in Propylencarbonat). Die Menge der freien Isocyanatgruppen beträgt ca. 11 bis 12 Gew. %, bezogen auf die Lösung. Der Vernetzer wird bevorzugt in einer Menge von 1 bis 10 Gew. % bezüglich der Menge aller Feststoffe der Formulierung eingesetzt. Die Vernetzer auf Basis von Isocyanuraten eignen sich besonders zur Vernetzung der Copolymere I.

Die Formulierung kann weiterhin typische Additive und Hilfsmittel, UV-Schutzmittel sowie Farbstoffe enthalten. Beispiele derartiger Additive sind in WO 2008/052913 Seite 35, Zeile 17 bis Seite 37, Zeile 5 genannt.

Farbstoffe und Pigmente können neben rein ästhetischen Zwecken eine Warnwirkung z.B. auf Vögel oder Säugetiere ausüben oder eine Tarnung der insektiziden Netze gegenüber Insekten bewirken. Darüber hinaus können dunkle Farben eine evtl. gewünschte Beschattung bewirken sowie die schädliche Wirkung des UV-Lichts auf Wirkstoffe und textile Fasern bei Anwendungen im Freien abschwächen.

Netzmittel und Verdicker können eingesetzt werden, um bei schlecht und daher inhomogen benetzbaren Substraten, wie beispielsweise Polyolefinfasern, einen gleichmäßigen Auftrag der Behandlungsflotte zu erreichen. Zu diesem Zwecke könnten auch mit Wasser mischbare Lösemittel eingesetzt werden, was aber wegen der Umweltschädlichkeit nicht bevorzugt wird. Dem Fachmann sind die üblicherweise verwendeten Hilfsmittel und ihre Konzentrationen bekannt.

Bevorzugt können die Formulierungen Antioxidantien, Peroxidabfängern, UV-Absorbern und Lichtschutzmitteln umfassen. Dies ist insbesondere empfehlenswert bei Netzen, die im Freien bzw. in Gewächshäusern einer erhöhten UV-Bestrahlung ausgesetzt sind. Die genannten Zusätze schützen sowohl die Substatfasern wie auch die Wirkstoffe von strahlungsbedingter Zersetzung.

Geeignete UV-Absorber sind beispielsweise in oder WO 02/46503 oder in WO 2007/077101 beschrieben. UV-Absorber können einerseits als Komponente der Formulierung zum Imprägnieren verwendet werden. Sie können aber auch, beispielsweise bei Polyolefinen und Polyestern, bereits im Zuge der Herstellung der Fasern eingearbeitet werden. Es können auch vorteilhaft Mischungen mehrerer Stabilisatoren, die verschiedene Schutzwirkungen ausüben, eingesetzt werden. Bezogen auf das Gewicht des unbehandelten Netzes werden in der Regel 0.2 bis 5 Gew.-%, bevorzugt 0.25 bis 4 % und ganz besonders bevorzugt 0.5 bis 3.5 % Stabilisator eingesetzt. Die Menge in der Formulierung wird vom Fachmann entsprechend eingestellt.

### Verfahren zum Imprägnieren

Zum Herstellen der erfindungsgemäßen, beschichteten Netze, werden die nicht imprägnierten Netze mit einer Mischung mindestens umfassend ein polymeres Bindmittel und mindestens ein Insektizid behandelt, bevorzugt mit der genannten wässrigen Formulierung. Die Behandlung kann nach dem Fachmann bekannten Verfahren vorgenommen werden, beispielsweise durch Tauchen oder Besprühen des unbehandelten Netzes mit der Formulierung. Die Behandlung kann bei Raumtemperatur oder auch bei erhöhten Temperaturen vorgenommen werden. Sofern vernetzt werden soll kann sich an den Behandlungsschritt bei niedrigeren Temperaturen, beispielsweise bei 10 bis 70°C noch eine Nachbehandlung bei erhöhten Temperaturen, z.B. bei 50 bis 170°C, bevorzugt 70 bis 150°C anschließen. Einzelheiten der Behandlung sind beispielsweise in WO 2005/064072 Seite 29, Zeile 16 bis Seite 35, Zeile 36 offenbart.

Das Imprägnieren kann mittels üblicher, dem Fachmann bekannten Apparaturen zum Imprägnieren vorgenommen, die Imprägnierung kann auch mit einfachen Mitteln durch den Endverbraucher selbst vorgenommen werden, beispielsweise durch einfaches Eintunken gefolgt von Trocknen an der Luft. Hierzu wird bevorzugt ein geeignetes Bindemittelsystem gewählt, welches nicht bei höheren Temperaturen aushärten muss. Hierzu kann beispielsweise das oben genannte Copolymer II bevorzugt eingesetzt werden.

Die Menge an Insektiziden auf dem Netz wird vom Fachmann je nach den gewünschten Eigenschaften des Netzes bestimmt. Bewährt hat sich eine Menge von 30 bis 300 mg/m², ohne dass die Erfindung auf diesen Bereich beschränkt sein soll. Bevorzugt kann eine Menge von 50 bis 250 mg/m² eingesetzt werden.

Die Menge kann vom Fachmann eingestellt werden, indem man zunächst durch eine Differenzwägung die vom Netz im Zuge des Verfahrens aufgenommene Menge an wässriger Formulierung bestimmt, je nach dem angewendeten Verfahren z.B. die Menge nach einfachem Eintauchen oder die Menge nach Eintauchen und Abquetschen. Die aufgenommene Menge hängt typischerweise von der Art des eingesetzten Netzes ab. Anschließend wird die Konzentration der Komponenten der Formulierung, also auch des Insektizids so gewählt, dass die gewünschte Menge pro Flächeneinheit des Netzes erhalten wird.

### Eigenschaften und Verwendung der erfindungsgemäßen Netze

Die erfindungsgemäßen Netze bieten einerseits einen guten Schutz auch vor kleinen Insekten, weisen aber dennoch eine gute Luft-, Wasserdampf- und Lichtdurchlässigkeit auf.

Überraschenderweise wurde gefunden, dass nach der Imprägnierung auch Insekten, welche ein imprägniertes Netz mit einer Höhe hₐ eigentlich noch passieren könnten, das Netz nicht mehr passieren können. Es kann also ein Netz mit größerer Höhe hₐ gewählt werden, als ohne Imprägnierung notwendig wäre und dementsprechend ist auch die Luft-, Wasserdampf- und Lichtdurchlässigkeit besser.

Die erfindungsgemäßen Netze können zum Schutz vor Insektenschädlingen aller Art verwendet werden. Sie können insbesondere zum Schutz vor Insekten mit einem kritischen Insektendurchmesser von ca. 0,2 bis ca. 0,6 mm eingesetzt werden, wie beispielsweise Fransenflügler, Mottenschildläuse (White flies) oder Sandfliegen wie beispielsweise Phlebotomus papatasi.

Die erfindungsgemäßen Netze können zum Schutz von Gütern vor Schädlingen verwendet werden. Hierdurch wird die Gefahr der Kontaminierung des geschützten Gutes mit Schädlingen zumindest minimiert. Bei dem zu schützenden Gut kann es sich beispielsweise um Holzstapel, Obst, Gemüse, Getreide, Kakaobohnen, Kaffeebohnen, Tabak oder Gewürze handeln. Es kann sich um Güter handeln, welche offen gelagert oder transportiert werden, oder um solche die in Form von Ballen, Verpackungen wie beispielsweise Kartonverpackungen oder Holzverpackungen gelagert oder transportiert werden. Sie können beispielsweise eingesetzt werden, indem man das zu schützende Gut -verpackt oder unverpackt- mit den Netzen einwickelt.

In einer bevorzugten Ausführungsform der Erfindung können die erfindungsgemäßen Netze zum Schutz von Tabak verwendet werden. Es kann sich hierbei um den Schutz in allen Stadien der Tabak-Verarbeitung, der Tabak-Lagerung oder des Tabak-Transports handeln. Die Netze können hierbei insbesondere zum Schutz vor Tabakkäfern (Lasioderma serricorne) eingesetzt werden.

Die erfindungsgemäßen Netze können beispielsweise zum Schutz von ungetrockneten oder getrockneten Tabakblättern, von verpacktem Tabak oder von Tabakprodukten eingesetzt werden. Die Art des Schutzes richtet sich hierbei nach dem jeweils zu schützenden Produkt. Tabak wird zum Transport üblichwerweise in geeignete Verpackungen, insbesondere Kartons oder Fässer verpackt. Zum Schutz bei der Lagerung und dem Transport können die mit Tabak gefüllten Verpackungen beispielsweise in die erfindungsgemäßen Netze eingewickelt werden. Dies kann einzeln erfolgen, oder es können auch mehrere Verpackungen, beispielsweise aufeinander gestapelte Kartons zusammen in die Netze eingewickelt oder mit den Netzen bedeckt werden. Vorrichtungen, wie beispielsweise Regale, in denen Tabakblätter getrocknet und/oder fermentiert werden können beispielsweise mit den erfindungsgemäßen Netzen behängt werden oder es kann mit Hilfe zusätzlicher Stützen ein Zelt über den besagten Vorrichtungen aufgebaut werden. Bei zu schützenden Tabakprodukten kann es sich insbesondere um Zigarren oder Zigaretten handeln.

Die erfindungsgemäßen Netze können weiterhin zum Schutz von Pflanzen aller Art eingesetzt werden, beispielsweise zum Schutz von Nutz- oder Tierpflanzen. Dies kann geschehen, indem man die Pflanzen mit dem Netz bedeckt. Sofern die Pflanzen selbst stabil genug sind, wie beispielsweise Bäume, kann man diese direkt mit den Netzen bedecken. Sofern es sich um wenig stabile Pflanzen handelt, wie beispielsweise Sämlinge, kann man das Netz mittels geeigneter Stützen über den Pflanzen fixieren. Denkbar als Stützen sind einfache Pfosten oder auch Rundstützen, wie sie beispielsweise für Folientunnel gebräuchlich sind.

Besonders vorteilhaft können die Netze auch beregnet werden. Sie weisen einerseits eine ausreichend hohe Wasserdurchlässigkeit auf, so dass das Wasser auch trotz des engmaschigen Netzes noch die damit abgedeckten Pflanzen erreicht und umgekehrt durch Staunässe hervorgerufene Fäulnis vermieden wird. Weiterhin bleibt aufgrund der erfindungsgemäßen Beschichtung, insbesondere einer vernetzten Beschichtung das Insektizid dennoch auf dem Netz fixiert, so dass das Netz noch lange Wirkung zeigt.

Die erfindungsgemäßen Netze können weiterhin als Material zum Schutz von Fensterund Türöffnungen verwendet werden, beispielsweise als Fenstermaterial oder Türmaterial für Gebäude wie Häuser oder Ställe oder auch für Zelte. Sie können weiterhin zum Bau von Gewächshäusern verwendet werden, beispielsweise auch als Fensteroder Türmaterial oder auch als ganze Wände.

Die Insektenschutznetze können auch zum Bau von Zäunen zum Schutz vor niedrig fliegenden Insekten eingesetzt werden. Einzelheiten zur Konstruktion derartiger Zäunen sind beispielsweise in EP 1 411 764 B1 offenbart.

Die folgenden Beispiele sollen die Erfindung näher erläutern:

### A) Herstellung der verwendeten Netze:

Für die Versuche werden drei verschiedene Netze mit jeweils viereckigen Maschen in Form eines Parallelogramms eingesetzt:

| | hₐ | b | Fläche [mm²] | Dicke der Fasern [mm] |
|---|---|---|---|---|
| Netz 1 | 2 mm | 2 mm | 4 | |
| Netz 2 | 1 mm | 1 mm | 1 | |
| Netz 3 | 0,7 mm | 0,9 mm | 0,63 | 0,2 bis 0,3 |

Die für die Versuche jeweils eingesetzten Netze werden mit einer wässrigen Formulierung aus dem Insektizid Alphacypermethrin, einem thermisch vernetzbaren Bindemittel (ca. 81 % Butylacrylat, 16 % Acrylnitril, 2 % N-Methylol(meth)acrylamid, 1 % Acrylsäure) sowie einem Vernetzer auf Isocyanatbasis imprägniert, getrocknet und 1 min bei ca. 100°C vernetzt. Einzelheiten zur Herstellung des zu verwendenden Bindemittels sowie der Imprägnierung sind in WO 2005/064072, Seite 42 bis Seite 50 dargestellt; verwendet wird eine Formulierung der Zusammensetzung B01 (Seite 49, Tabelle 2). Die Menge an Insektizid auf dem Netz beträgt ca. 200 mg/m². Sie wird eingestellt, indem man die Flüssigkeitsaufnahme des Netzes (ggf. nach Abquetschen unter definierten Bedingungen) bestimmt und die Konzentration der Formulierung so anpasst, dass die gewünschte Menge pro m² auf dem Netz erhalten wird.

### B) Test der Netze

### B1) Test der Wirkung gegen Tabakkäfer (Lasioderma serricone)

Als Testapparatur wird eine handelsübliche Röhre aus Pappkarton verwendet (Länge ca. 450 mm, Durchmesser 76 mm; Querschnittsfläche 45 cm²). Das eine Ende der Röhre wird mit dem zu testenden Netz verschlossen, welches mit einem Klebeband fixiert wird. Das andere Ende der Röhre weist eine handelsübliche, abnehmbare Verschlusskappe auf. An das mit dem Netz verschlossene Ende wird weiterhin mithilfe eines Klebebandes eine Dose aus einem transparenten Kunststoffmaterial geklebt. Die Dose enthält geröstete Haferflocken als Futtermaterial.

Zu Durchführung der Tests wird die Röhre vertikal aufgestellt, durch das verschließbare Ende jeweils eine bestimmte Anzahl von Käfern in die Röhre gesetzt und anschließend die Röhre wieder verschlossen. Die Käfer versuchen, durch das Netz zum Futter vorzudringen. Es wird jeweils nach bestimmten Zeiten bestimmt, wie viele Käfer verenden und wie viele zum Futter vordringen können. Es werden jeweils 8 Versuche durchgeführt und die Ergebnisse gemittelt.

In einer ersten Versuchsreihe werden jeweils 10 Zigarettenkäfer eingesetzt. In der nachfolgenden Tabelle 1 ist die Mortalität dargestellt:

**Tabelle 1: Gemittelte Mortalität nach einem und nach zwei Tagen**

| | Fläche | 1 Tag | 2 Tage |
|---|---|---|---|
| Kein Netz | - | 3 % | 3 % |
| Netz 1, unbehandelt | 4 mm² | 0 % | 0 % |
| Netz 3, unbehandelt | 0,63 mm² | 0 % | 0 % |
| Netz 1, behandelt | 4 mm² | 100 % | 100 % |
| Netz 3, behandelt | 0,63 mm² | 100 % | 100 % |

In einer zweiten Versuchsreiche wird der Einfluss der Populationsdichte auf die Durchdringung des Netzes innerhalb eines Tages untersucht. Es wird eine Versuchsreihe mit 10 Käfern und eine zweite mit 20 Käfern durchgeführt. Tabelle 2 gibt denjenigen Anteile an, die nach jeweils einem Tag durch das Netz dringen, wobei nicht berücksichtigt wird, ob die Käfer nach dem Durchdringen verenden oder nicht.

**Tabelle 2: Gemittelte Durchdringung des Netzes durch die Käfer innerhalb von einem Tag.**

| | Fläche | 10 Käfer | 20 Käfer |
|---|---|---|---|
| Netz 1, behandelt | 4 mm² | 95 % | 100 % |
| Netz 2, behandelt | 1 mm² | 0 % | 25 % |
| Netz 3, behandelt | 0,63 mm³ | 0 % | 0 % |

Die Versuche zeigen, dass der Populationsdruck einen signifikanten Einfluss auf die Durchdringungsrate des Netzes hat. Ein grobmaschiges Netz kann von Tabakkäfern noch trotz Imprägnierung durchdrungen werden. Ein 1 mm²-Netz bietet zwar bei niedrigen Populationsdrücken ausreichenden Schutz, bei höheren Populationsdrücken wird das Netz aber zunehmend durchlässig. Nur das erfindungsgemäße Netz 3 bietet ausreichenden Schutz auch bei hohen Populationsdrücken.

### B2) Test der Wirkung gegen Sandfliegen (Phlebotomus papatasi)

Für die Versuche mit Sandfliegen wird ein Versuchsaufbau aus zwei zylindrischen Versuchkammern, einer metallischen Kammer und einer Plexiglaskammer verwendet. Zwischen beide Kammern befindet sich ein Schieber, mit dem sich die Verbindung zwischen beiden Kammern öffnen und schließen ließ. Außerdem kann ein Netz in die Verbindung zwischen beiden Kammern eingebaut werden (Fläche des Netzes: ca. 100 cm²).

Für einen Test werden ca. 12 h vor jedem Test ca. 20 Sandfliegen in die Stahlkammer gesetzt, die Stahlkammer ("Sandfliegenkammer") wieder verschlossen, und die Fliegen werden bis zu Versuchsbeginn hungern lassen. Unmittelbar vor dem Test wird eine anästhesierte Maus in die Plexiglaskammer ("Mauskammer") gelegt und der Schieber zwischen den Kammern wird geöffnet. Nach dem Öffnen des Schiebers versuchen die Sandfliegen durch das Netz zur Maus vorzudringen und sich dort niederzulassen. Die Versuchsdauer beträgt jeweils 30 min. Hiernach werden die Fliegen aus den Kammern abgesaugt und die Anzahl der Fliegen in jeder der Kammern gezählt. Es wird außerdem bestimmt, ob die Sandfliegen noch wohlauf, nach Versuchsende bewegungsunfähig auf dem Rücken liegend (knock-down) oder innerhalb von 24 h tot sind. Die Versuche werden jeweils 7 x wiederholt und es wird der Mittelwert gebildet. Die Ergebnisse sind in den nachfolgenden Tabellen zusammengestellt.

Es wird ein Vergleichsversuch ohne Netz durchgeführt sowie Versuche mit behandeltem und unbehandeltem Netz 3. Um Beschädigungen des Netzes zu simulieren, werden weiterhin in ein unbehandeltes sowie ein behandeltes Netz 3 jeweils 3 Löcher von jeweils 3 mm Durchmesser gestanzt und die durchlöcherten Netze in gleicher Art und weise in die Apparatur zum Test eingebaut. Die Ergebnisse sind in den Tabellen 3 und 4 zusammengestellt.

**Tabelle 3: Aufenthaltsort der Sandfliegen nach Versuchsende**

| | Sandfliegenkammer | Mauskammer |
|---|---|---|
| ohne Netz | 11 | 8 |
| Netz 3, unbehandelt | 18 | >1 |
| Netz 3, unbehandelt, mit Löchern | 12 | 7 |
| Netz 3, behandelt | 19 | 0 |
| Netz 3, behandelt, mit Löchern | 19 | 0 |

**Tabelle 4: Gemittelte knock-down- und Mortalitätsrate beim Versuch in der Sandfliegenkammer**

| | Knock-down nach Versuchsende | Mortalität und knock-down nach 24 h |
|---|---|---|
| Netz 3, unbehandelt | 1 % | 1 % |
| Netz 3, behandelt | 24 % | 31 % |

Die Versuche zeigen, dass bereits nach nur 30-minütigem Aufenthalt in der Vorrichtung ein größerer Anteil der Sandfliegen getötet wird.

Die Durchdringung des Netzes 3 für Sandfliegen ist bei einem intakten Netz ohne Imprägnierung bereits sehr gering, wobei sich die Verhinderung der Durchdringung aber mit Imprägnierung noch etwas verbessern lässt. Weist das Netz hingegen Löcher auf, so können Fliegen durch das unbehandelte Netz hindurchdringen. Eine Imprägnierung verhindert aber auch bei durchlöchertem Netz das Durchdringen der Fliegen.

Dies ist so zu erklären, dass sich die Fliegen auch auf einem Löcher aufweisenden Netz niederlassen, und erst einmal eine Weile darauf herumlaufen, bevor sie das Loch im Netz "finden". Diese Kontaktzeiten reichen beim Test aus, um die Sandfliegen zumindest zu lähmen ("knock-down").

## Patentansprüche

1. Insektenschutznetz aus Textilfasern einer Dicke von 0,05 mm bis 0,6 mm, wobei die Textilfasern so angeordnet sind, dass das Netz ein Muster von Maschen mit einer geraden Anzahl von Ecken umfasst, und wobei das Netz mit mindestens einem Insektizid ausgerüstet ist, **dadurch gekennzeichnet, dass** die Maschen ausgewählt werden aus der Gruppe von
• viereckigen Maschen in Form eines Parallelogramms mit den Seiten a und b sowie einer Höhe hₐ handelt, wobei die Höhe hₐ 0,1 mm bis 0,99 mm und das Länge-zu-Höhe-Verhältnis b/ hₐ 1:1 bis 5:1 beträgt, und
• sechseckigen Maschen, welche drei Paare von jeweils zueinander parallelen Seiten a, b und c in den Abständen hₐ, h_{b} und h_{c} aufweisen, wobei die Höhe hₐ 0,1 bis 0,99 mm und das Verhältnis ((h_{b}+h_{c}) / 2) / hₐ 1:1 bis 5:1 beträgt,
• achteckigen Maschen, welche vier Paare von jeweils zueinander parallelen Seiten a, b, c und d in den Abständen hₐ, h_{b}, h_{c} und h_{d} aufweisen, wobei die Höhe hₐ 0,1 bis 0,99 mm und das Verhältnis ((h_{b}+h_{c}+h_{d}) / 3) / hₐ 1:1 bis 5:1 beträgt,
und wobei sich die Angaben von Länge und Höhe jeweils auf das Lochmaß beziehen.

2. Insektenschutznetz gemäß Anspruch 1, **dadurch gekennzeichnet, dass** das Netz mit einer Formulierung umfassend mindestens ein Insektizid und mindestens ein polymeres Bindemittel imprägniert ist.

3. Insektenschutznetz gemäß Anspruch 1, **dadurch gekennzeichnet, dass** die Höhe hₐ 0,1 mm bis 0,9 mm beträgt, und dass die Textilfasern eine Dicke von 0,12 mm bis 0,35 mm aufweisen.

4. Insektenschutznetz gemäß einem der Ansprüche 1 bis 3, **dadurch gekennzeichnet, dass** es sich um eine Polyolefinfaser oder eine Polyesterfaser handelt.

5. Insektenschutznetz gemäß einem der Ansprüche 2 bis 4, **dadurch gekennzeichnet, dass** das polymere Bindemittel mindestens die folgenden Monomere umfasst:
(A) 50 bis 95 Gew. % mindestens eines (Meth)acrylats (A) der allgemeinen Formel H₂C=CHR¹ -COOR², wobei R¹ für H oder Methyl und R² für einen aliphatischen, linearen oder verzweigten Kohlenwasserstoffrest mit 1 bis 12 Kohlenstoffatomen steht,
(B) 1 bis 20 Gew. % (Meth)acrylsäure und/oder zusätzliche funktionelle Gruppen aufweisenden (Meth)acrylsäurederivate (B), sowie
(C) 0 bis 30 Gew. % weiterer, davon verschiedenen ethylenisch ungesättigte Monomere.

6. Insektenschutznetz gemäß einem der Ansprüche 2 bis 5, **dadurch gekennzeichnet, dass** das polymeres Bindemittel vernetzt ist, wobei die Vernetzung mittels Isocyanuraten, welche über freie Isocyanatgruppen verfügen, vorgenommen wird.

7. Insektenschutznetz gemäß einem der Ansprüche 2 bis 4, **dadurch gekennzeichnet, dass** das polymere Bindemittel mindestens die folgenden Monomere umfasst:
(A) 60 bis 95 Gew. % Ethylen,
(B) 5 bis 40 Gew. % mindestens einer ethylenisch ungesättigten Carbonsäure ausgewählt aus der Gruppe von C₃ bis C₁₀-Monocarbonsäuren und C₄ bis C₁₀-Dicarbonsäuren, sowie
(C) optional 0 bis 30 Gew. % weitere, davon verschiedene ethylenisch ungesättigte Monomere.

8. Insektenschutznetz gemäß einem der Ansprüche 1 bis 7, **dadurch gekennzeichnet, dass** die Höhe hₐ 0,1 bis 0,9 mm, bevorzugt 0,12 bis 0,8 mm und besonders bevorzugt 0,25 bis 0,7 mm beträgt.

9. Verwendung von Insektenschutznetzen gemäß einem der Ansprüche 1 bis 8 zum Schutz von Fenster- und Türöffnungen in festen Gebäuden oder Zelten.

10. Verwendung von Insektenschutznetzen gemäß einem der Ansprüche 1 bis 8 zum Bau von Gewächshäusern.

11. Verwendung gemäß Anspruch 10, **dadurch gekennzeichnet, dass** die Insektenschutznetze zum Schutz von Belüftungsöffnungen und Türen der Gewächshäuser verwendet werden.

12. Verwendung von Insektenschutznetzen gemäß einem der Ansprüche 1 bis 8 zum Schutz von Pflanzen.

13. Verwendung von Insektenschutznetzen gemäß einem der Ansprüche 1 bis 8 zum Schutz von Gütern.

14. Verwendung gemäß Anspruch 13, **dadurch gekennzeichnet, dass** es sich bei den Gütern um Güter ausgewählt aus der Gruppe von
• Holzstapeln,
• Obst, Gemüse, Getreide, Kakaobohnen, Kaffeebohnen oder Gewürze, und
• Tee, Tabak oder Baumwolle
handelt.

15. Verwendung von Insektenschutznetzen gemäß einem der Ansprüche 1 bis 8 zum Schutz vor Sandfliegen.

## Claims

1. An insect protection net made of textile fibers with a thickness of 0.05 mm to 0.6 mm, the textile fibers being arranged in such a way that the net comprises a pattern of meshes with an even number of corners, and the net being finished with at least one insecticide, wherein the meshes are selected from the group consisting of
• tetragonal meshes in the form of a parallelogram with the sides a and b and a height hₐ, the height hₐ being from 0.1 mm to 0.99 mm and the length/height ratio b/ hₐ being 1:1 to 5:1, and
• hexagonal meshes, which have three pairs of sides a, b and c which are in each case parallel to one another spaced apart by the distances hₐ, h_{b} and h_{c}, the height hₐ being from 0.1 to 0.99 mm and the ratio ((h_{b}+h_{c}) / 2) / hₐ being 1:1 to 5:1,
• octagonal meshes, which have four pairs of sides a, b, c and d which are in each case parallel to one another spaced apart by the distances hₐ, h_{b}, h_{c} and h_{d}, the height hₐ being from 0.1 to 0.99 mm and the ratio ((h_{b}+h_{c}+h_{d}) / 3) / hₐ being 1:1 to 5:1,
and the specifications of length and height referring in each case to the dimensions of the screen hole.

2. The insect protection net according to claim 1, wherein the net is impregnated with a formulation comprising at least one insecticide and at least one polymeric binder.

3. The insect protection net according to claim 1, wherein the height hₐ is from 0.1 mm to 0.9 mm, and wherein the textile fibers have a thickness of from 0.12 mm to 0.35 mm.

4. The insect protection net according to any of claims 1 to 3, wherein the textile fiber is a polyolefin fiber or a polyester fiber.

5. The insect protection net according to any of claims 2 to 4, wherein the polymeric binder comprises at least the following monomers:
(A) from 50 to 95% by weight of at least one (meth)acrylate (A) of the general formula H₂C=CHR¹ -COOR², where R¹ is H or methyl and R² is an aliphatic, linear or branched hydrocarbon radical having 1 to 12 carbon atoms,
(B) from 1 to 20% by weight of (meth)acrylic acid and/or (meth)acrylic acid derivatives (B) which have additional functional groups, and
(C) from 0 to 30% by weight of further, ethylenically unsaturated monomers other than the above.

6. The insect protection net according to any of claims 2 to 5, wherein the polymeric binder is crosslinked the crosslinking being carried out by means of isocyanurates which have free isocyanate groups.

7. The insect protection net according to any of claims 2 to 4, wherein the polymeric binder comprises at least the following monomers:
(A) from 60 to 95% by weight of ethylene,
(B) from 5 to 40% by weight of at least one ethylenically unsaturated carboxylic acid selected from the group consisting of C₃- to C₁₀-monocarboxylic acids and C₄- to C₁₀-dicarboxylic acids, and
(C) optionally from 0 to 30% by weight of further, ethylenically unsaturated monomers other than the above.

8. The insect protection net according to any of the claims 1 to 7, wherein the height hₐ is from 0.1 to 0.9mm, preferably from 0.12 to 0.8mm and particularly preferably from 0.25 to 0.7mm.

9. The use of insect protection nets according to any of claims 1 to 8 for the protection of window and door openings in solid buildings or tents.

10. The use of insect protection nets according to any of claims 1 to 8 for the construction of greenhouses.

11. The use according to claim 10, wherein the insect protection nets are used for the protection of ventilation openings and doors of the greenhouses.

12. The use of insect protection nets according to any of claims 1 to 8 for the protection of plants.

13. The use of insect protection nets according to any of claims 1 to 8 for the protection of goods.

14. The use according to claim 13, wherein the goods are goods selected from the group consisting of
• wood stacks,
• fruit, vegetables, cereals, cocoa beans, coffee beans or spices, and
• tea, tobacco or cotton.

15. The use of insect protection nets according to any of claims 1 to 8 for the protection from sand flies.

## Revendications

1. Filet de protection contre les insectes constitué de fibres textiles d'une épaisseur de 0,05 mm à 0,6 mm, les fibres textiles étant agencées de sorte que le filet présente un motif de mailles ayant un nombre pair d'angles, et le filet étant muni d'au moins un insecticide, **caractérisé en ce que** les mailles sont choisies dans le groupe constitué par :
- les mailles tétragonales sous la forme d'un parallélogramme de côtés a et b et de hauteur hₐ, la hauteur hₐ étant de 0,1 mm à 0,99 mm et le rapport longueur sur hauteur b/hₐ étant de 1:1 à 5:1, et
- les mailles hexagonales, qui comprennent trois paires de côtés a, b et c respectivement parallèles aux distances hₐ, h_{b} et h_{c}, la hauteur hₐ étant de 0,1 à 0,99 mm et le rapport ((h_{b}+h_{c}) / 2) / hₐ étant de 1:1 à 5:1,
- les mailles octagonales, qui comprennent quatre paires de côtés a, b, c et d respectivement parallèles aux distances hₐ, h_{b}, h_{c} et h_{d}, la hauteur hₐ étant de 0,1 à 0,99 mm et le rapport ((h_{b}+h_{c}+h_{d}) / 3) /hₐ étant de 1:1 à 5:1,
les données de longueur et de hauteur se rapportant à chaque fois à la dimension des trous.

2. Filet de protection contre les insectes selon la revendication 1, **caractérisé en ce que** le filet est imprégné avec une formulation comprenant au moins un insecticide et au moins un liant polymère.

3. Filet de protection contre les insectes selon la revendication 1, **caractérisé en ce que** la hauteur hₐ est de 0,1 mm à 0,9 mm, et **en ce que** les fibres textiles présentent une épaisseur de 0,12 mm à 0,35 mm.

4. Filet de protection contre les insectes selon l'une quelconque des revendications 1 à 3, **caractérisé en ce qu'**il s'agit d'une fibre de polyoléfine ou d'une fibre de polyester.

5. Filet de protection contre les insectes selon l'une quelconque des revendications 2 à 4, **caractérisé en ce que** le liant polymère comprend au moins les monomères suivants :
(A) 50 à 95 % en poids d'au moins un (méth) acrylate (A) de formule générale H₂C=CHR¹-COOR², R¹ représentant H ou méthyle et R² représentant un radical hydrocarboné aliphatique, linéaire ou ramifié, contenant 1 à 12 atomes de carbone,
(B) 1 à 20 % en poids d'acide (méth)acrylique et/ou de dérivés de l'acide (méth)acrylique comprenant des groupes fonctionnels supplémentaires (B), et
(C) 0 à 30 % en poids de monomères éthyléniquement insaturés supplémentaires, différents de ceux-ci.

6. Filet de protection contre les insectes selon l'une quelconque des revendications 2 à 5, **caractérisé en ce que** le liant polymère est réticulé, la réticulation étant réalisée par des isocyanurates disposant de groupes isocyanate libres.

7. Filet de protection contre les insectes selon l'une quelconque des revendications 2 à 4, **caractérisé en ce que** le liant polymère comprend au moins les monomères suivants :
(A) 60 à 95 % en poids d'éthylène,
(B) 5 à 40 % en poids d'au moins un acide carboxylique éthyléniquement insaturé choisi dans le groupe constitué par les acides monocarboxyliques en C₃ à C₁₀ et les acides dicarboxyliques en C₄ à C₁₀, et
(C) éventuellement 0 à 30 % en poids de monomères éthyléniquement insaturés supplémentaires, différents de ceux-ci.

8. Filet de protection contre les insectes selon l'une quelconque des revendications 1 à 7, **caractérisé en ce que** la hauteur hₐ est de 0,1 à 0,9 mm, de préférence de 0,12 à 0,8 mm et de manière particulièrement préférée de 0,25 à 0,7 mm.

9. Utilisation de filets de protection contre les insectes selon l'une quelconque des revendications 1 à 8 pour la protection d'ouvertures de fenêtres et de portes dans des bâtiments fixes ou des tentes.

10. Utilisation de filets de protection contre les insectes selon l'une quelconque des revendications 1 à 8 pour la construction de serres.

11. Utilisation selon la revendication 10, **caractérisée en ce que** les filets de protection contre les insectes sont utilisés pour la protection d'ouvertures d'aération et de portes des serres.

12. Utilisation de filets de protection contre les insectes selon l'une quelconque des revendications 1 à 8 pour la protection de plantes.

13. Utilisation de filets de protection contre les insectes selon l'une quelconque des revendications 1 à 8 pour la protection de biens.

14. Utilisation selon la revendication 13, **caractérisée en ce que** les biens sont des biens choisis dans le groupe constitué par :
- les piles de bois,
- les fruits, les légumes, les céréales, les fèves de cacao, les grains de café ou les épices, et
- le thé, le tabac ou le coton.

15. Utilisation de filets de protection contre les insectes selon l'une quelconque des revendications 1 à 8 pour la protection contre les phlébotomes.
